# EUROPÄISCHE PATENTSCHRIFT

(11) **EP 0 907 844 B1**
(45) Veröffentlichungstag und Bekanntmachung des Hinweises auf die Patenterteilung: **23.02.2000**
(21) Anmeldenummer: 97930413.6
(22) Anmeldetag: 26.06.1997
(51) Int. Cl.: F16F 13/14

(54) **HYDRAULISCH DÄMPFENDES ELASTOMERLAGER**
HYDRAULICALLY DAMPING ELASTOMER BEARING
PALIER EN ELASTOMERE A AMORTISSEMENT HYDRAULIQUE

(30) Priorität: 02.07.1996 DE 19626535
(43) Veröffentlichungstag der Anmeldung: 14.04.1999
(73) Patentinhaber: DaimlerChrysler AG, 70567 Stuttgart (DE)
(72) Erfinder: BRÜHL, Hubert, D-73550 Waldstetten (DE)
(86) Internationale Anmeldenummer: EP9703352
(87) Internationale Veröffentlichungsnummer: WO9800654

(56) Entgegenhaltungen:
- EP-A- 0 577 916
- EP-A- 0 656 487
- DE-A- 3 731 004
- DE-A- 4 010 922
- DE-A- 4 307 559
- DE-C- 4 103 012
- FR-A- 2 622 661
- GB-A- 2 291 691
- US-A- 4 861 004
- PATENT ABSTRACTS OF JAPAN vol. 011, no. 025 (M-556), 23.Januar 1987 & JP 61 197834 A (KINUGAWA RUBBER IND CO LTD), 2.September 1986,

## Beschreibung

Die Erfindung betrifft ein hydraulisch dämpfendes Elastomerlager.

Im Fahrzeugbau werden zunehmend hydraulisch dämpfende Elastomerlager eingesetzt. Insbesondere im Fahrwerksbereich wird neben der frequenzselektiven Dämpfung bei sehr kleinen Schwingungsamplituden auch in zunehmendem Maße eine stärkere Dämpfung einzelner Stöße, wie sie zu Beispiel beim Überfahren von Schlaglöchern und Querfugen entstehen, gefordert.

Die DE-C-4 307 559 zeigt folgende Merkmale des Anspruchs 1:
hydraulisch dämpfendes Elastomerlager mit
- einer äußeren Lagerhülse 1,
- einem in der Lagerhülse 1 angeordneten Elastomerkörper 2,
- einem von dem Elastomerkörper 2 gehaltenen Lagerkern 3, der sich achsparallel oder koaxial durch die Lagerhülse 1 erstreckt,
- zwischen dem Lagerkern 3 und der Lagerhülse 1 gebildeten und mit Flüssigkeit gefüllten Kammern 10,11,
- in wenigstens einer der Kammern 10,11 einem zwischen dem Lagerkern 3 und der Innenwandung der Lagerhülse 1 angeordneten Verdrängungskörper 7, der im unbelasteten Zustand des Elastomerlagers einen vorgegebenen Abstand zu einer Bezugsfläche am anderen der bewegbaren Bauteile (1,3) aufweist und der bei Überschreiten einer durch den Abstand vorgegeben Belastung zur Anlage an seiner Bezugsfläche kommt.

Bei dieser bekannten Anordnung ist zwischen dem Lagerkern und dem angeformten Anschlagpolster ein sich parallel zur Längsachse des Lagerkerns erstreckender, zur Außenseite hin offener Hohlraum vorgesehen, so daß bei Schwingungen mit großer Amplitude sowohl der Anschlagweg zwischen Lagerbuchse und Anschlagpolster wie auch der durch den Hohlraum gebildeten Abstand überwunden werden muß, bis eine progressive Dämpfung einsetzt. Der weitere Dämpfungsverlauf ist dabei von den Materialeigenschaften des Elastomers abhängig und somit nicht exakt bestimmbar. Außerdem kann in den offenen Hohlraum Schmutz gelangen, der den Abstand konstant hält und damit die Dämpfungscharakteristik negativ beeinflußt.

Der vorliegenden Erfindung liegt die Aufgabe zugrunde, das bekannte hydraulisch dämpfende Elastomerlager derart auszugestalten, daß zur Dämpfung von Schwingungsamplituden, die über eine genau definierbare Größe der Auslenkung hinausgehen, eine Dämpfung mit bestimmter progressiver Dämpfungscharakteristik erfolgt.

Diese Aufgabe wird durch ein hydraulisch dämpfendes Elastomerlager mit den Merkmalen des Anspruchs 1 gelöst.

Die wesentlichen Vorteile des erfindungsgemäßen Elastomerlagers sind darin zu sehen, daß bei Schwingungen, deren Amplitude eine bestimmte Größe überschreiten, eine exakt bestimmbare progressive Dämpfung erfolgt, da der Verdrängungskörper selbst unelastisch ist und die durch die hydraulische Abstützung des Verdrängungskörpers erzeugte Dämpfung über den Querschnitt der Drosselöffnung sehr exakt zu bemessen ist. Je nach Ausbildung des Verdrängungskörpers können sehr flache und nur geringen Bauraum beanspruchende Anordnungen realisiert werden, ohne daß dadurch die Dämpfungscharakteristik selbst beeinflußt wird.

Als zweckmäßige Weiterbildung des Erfindungsgegenstandes wird angesehen, daß der Verdrängungskörper am Lagerkern angeordnet und die Bezugsfläche an der Innenwandung der Lagerhülse gebildet ist. Dabei können in Abhängigkeit von den konstruktiven Gegebenheiten und den zu erwartenden Belastungsrichtungen mehrere Verdrängungskörper vorgesehen sein, wobei es als besonders zweckmäßig angesehen wird, daß zwei Verdrängungskörper vorhanden sind, die auf einer gemeinsamen Querachse des Lagerkerns liegen und somit diametral angeordnet sind.

Gemäß einer bevorzugten Weiterbildung ist an dem Lagerkern eine Senke mit kegeliger Fläche vorgesehen, in der sich eine Kegelmantelfläche des Verdrängungskörpers befindet und zwischen diesen Flächen ist die Verdrängungskammer gebildet. Mit einer solchen Ausgestaltung wird erreicht, daß der kegelige Sitz eine Selbstzentrierung des Verdrängungskörpers ermöglicht, so daß auch bei schiefer Krafteinleitung die Dämpfungsfunktion gewährleistet ist. Es ist außerdem zweckmäßig, daß die kegelige Fläche der Senke und die Kegelmantelfläche des Verdrängungskörpers bezogen auf eine zur Symmetrieachse orthogonale Ebene unterschiedliche Winkel aufweisen, wobei der Winkel der kegeligen Fläche der Senke größer ist als der Winkel der Kegelmantelfläche des Verdrängungskörpers. Auf diese Weise wird erreicht, daß am äußeren Rand der Verdrängungskammer ein geringerer Abstand zwischen Verdrängungskörper und Lagerkern besteht als zur Mitte der Verdrängungskammer hin, so daß zwischen diesen Teilen am Umfangsrand der Verdrängungskammer ein Ringspalt gebildet wird, der als Drosselöffnung wirkt. Dieser Ringspalt wird bei Einwirkung der Schwingungsamplitude zunehmend verringert, so daß die Dämpfungskraft ansteigt und schließlich der Umfangsrand des Verdrängungskörpers an der kegeligen Fläche der Senke anliegt.

Der Winkel der kegeligen Fläche sollte möglichst < 40° sein und beträgt vorzugsweise ca. 30°. Als besonders geeignet hat sich erwiesen, daß die Differenz der Winkel von kegeliger Fläche und Kegelmantelfläche zwischen 1° und 5°, vorzugsweise ca. 2° beträgt.

Zur Erzeugung einer weiter ansteigenden progressiven Dämpfung nach einem ersten Abschnitt des Dämpfungsvorgangs ist es zweckmäßig, zwischen dem Verdrängungskörper und dem diesen tragenden Bauteil eine elastomere Schicht anzuordnen. Dabei ist vorzugsweise die dem Verdrängungskörper gegenüberliegende Fläche der Verdrängungskammer auf einem Elastomerüberzug gebildet. Diese elastomere Schicht ermöglicht es, daß der Verdrängungskörper nach Schließen des Ringspalts noch weiter in die Senke bewegt werden kann, wobei sich der Umfangsrand des Verdrängungskörpers in die elastomere Schicht eindrückt. Damit trotz des geschlossenen Ringspalts weiterhin Fluid aus der Verdrängungskammer in die weitere Kammer strömen kann, ist am oberen Rand der Senke mindestens eine radiale Aussparung vorgesehen, durch welche die Verdrängungskammer mit einer der weiteren Kammern in Verbindung steht. Dabei können selbstverständlich zwei radiale Aussparungen diametral angeordnet sein.

In bevorzugter Weise ist der Abstand zwischen den Verdrängungsflächen so bemessen, daß der maximale Hub des Verdrängungskörpers ca. 1 mm beträgt. Dabei kann mit einem geringen Weg eine große Dämpfung erzeugt werden. Je nach konstruktiver Auslenkung, das heißt in Abhängigkeit der erforderlichen Dämpfungskräfte für einen bestimmten Einsatz des Elastomerlagers, kann die beaufschlagte Verdrängungsfläche entsprechend bemessen werden. Für den Einsatz in der Automobiltechnik wird es als zweckmäßig angesehen, daß die beaufschlagte Verdrängungsfläche > 200 mm² ist und vorzugsweise zwischen 300 mm² und 500 mm² beträgt.

Um den Verdrängungskörper bei unbelastetem Lager in einer definierten Position zu halten, ist es vorteilhaft, daß zentrisch in der Senke eine zylindrische Vertiefung angeordnet ist, an deren Zylinderwand mindestens partiell eine Elastomerschicht vorgesehen ist. An dem Verdrängungskörper ist ein rotationssymmetrischer Fortsatz angeformt, der in die Vertiefung ragt. Dabei weist die Elastomerschicht einen radial nach innen gerichteten Wulst auf, der in eine radiale Nut des Fortsatzes greift. Damit innerhalb der Vertiefung kein in sich abgeschlossenes Polster einer hydraulischen Flüssigkeit entsteht, ist es vorteilhaft, in der sich entlang der Zylinderwandung erstreckenden Elastomerschicht mindestens einen Kanal anzuordnen, der sich etwa vom Boden des Zylinderraums bis in die Verdrängungskammer erstreckt. Damit keine unbestimmten Verhältnisse bezüglich der Krafteinleitung auf den Verdrängungskörper auftreten, ist es vorteilhaft, eine möglichst punktförmige Berührung zwischen dem Verdrängungskörper und der Innenmantelfläche der Lagerhülse zu schaffen. Aus diesem Grund wird vorgeschlagen, daß der außerhalb der Senke befindliche Bereich des Verdrängungskörpers als Kugelabschnitt ausgebildet ist, wobei vorzugsweise der Radius des Kugelabschnittes maximal das 0,6-fache des Radius der Lagerhülse beträgt.

Vorzugsweise ist der Lagerkern als Hülse ausgebildet, an deren Mantelfläche Abschnitte mit größerer Wanddicke gestaltet sind, in denen jeweils die Senke angeordnet ist. Zwischen den mit Flüssigkeit gefüllten Kammern, die zur Dämpfung von Schwingungen mit kleiner Amplitude dienen, ist mindestens ein Drosselkanal vorgesehen, durch den die Kammern fluidisch kommunizieren. Zweckmäßigerweise erstrecken sich wirkungsmäßig parallel zu dem Drosselkanal zwei Bypass-Kanäle zwischen den Kammern, wobei in jedem dieser Kanäle ein Rückschlagventil angeordnet ist. Diese Rückschlagventile sind derart gestaltet, daß sie in unterschiedlichen Strömungsrichtungen öffnen und zwar bei einem bestimmten Druckniveau bzw. einer Druckdifferenz der beiden Kammern. Auf besonders einfache Weise sind diese Rückschlagventile durch an der Innenwandung der Lagerhülse anliegende Dichtlippen des Elastomerkörpers gebildet.

Ein Ausführungsbeispiel des erfindungsgemäßen Elastomerlagers ist nachstehend anhand der Zeichnung näher erläutert. In der Zeichnung zeigt:
- Fig. 1: einen Längsschnitt durch ein hydraulisch dämpfendes Elastomerlager,
- Fig. 2: einen Schnitt entlang der Linie II-II in Fig. 1,
- F'ig. 3: einen radialen Schnitt entlang der Linie III-III in Fig. 1,
- Fig. 4: eine vergrößerte Darstellung der Einzelheit IV in Fig. 3,
- Fig. 5: einen Schnitt entlang der Linie V-V in Fig. 4,
- Fig. 6: eine Ansicht in Richtung des Pfeiles VI in Fig. 4,
- Fig. 7: einen Schnitt entlang der Linie VII-VII in Fig. 4.

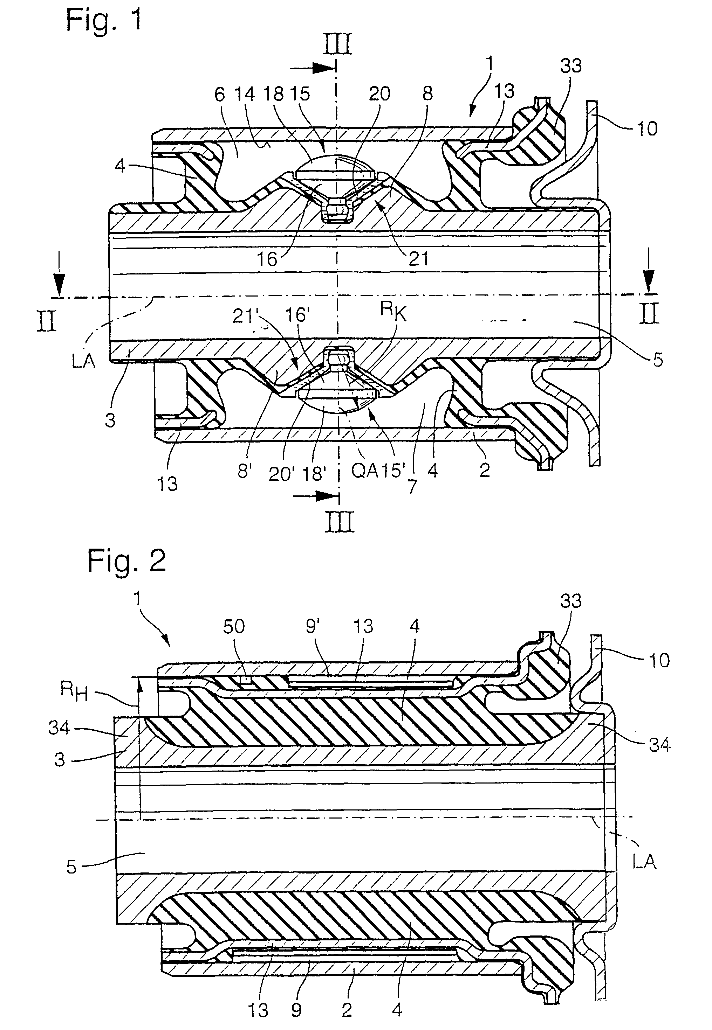

In Fig. 1 ist ein Längsschnitt durch ein Elastomerlager 1 gezeigt, das rotationssymmettrisch um eine Längsachse LA ausgebildet ist. Das Elastomerlager 1 umfaßt im wesentlichen eine Lagerhülse 2 sowie einen Lagerkern 3 und einen Elastomerkörper 4, der zwischen Lagerhülse 2 und Lagerkern 3 angeordnet ist. Der Elastomerkörper 4 ist sowohl mit der Lagerhülse 2 als auch mit dem Lagerkern 3 dichtend verbunden, beispielsweise durch Vulkanisation, wobei zwischen dem Lagerkern 3 und der Lagerhülse 2 flüssigkeitsgefüllte Kammern 6 und 7 gebildet sind. In dem Elastomerkörper 4 befindet sich ein die Formsteifigkeit des Elastomerkörpers 4 an bestimmten Stellen erhöhendes Formteil 13, das vorzugsweise aus einem Blech besteht. Der Lagerkern 3 ist als Hülse ausgebildet und besitzt eine zentrische Öffnung 5 zur Aufnahme eines Befestigungsbolzens.

Auf der in der Fig. 1 rechten Seite besitzt der Elastomerkörper einen vor der Stirnseite der Lagerhülse 2 gebildeten Wulst 33, der in einem bestimmten Abstand zu einem an der Stirnseite des Lagerkerns 3 befestigten Blechring 10 liegt und dazu dient, in Längsrichtung der Achse LA auf das Elastomerlager 1 einwirkende Schwingungen mit entsprechender Amplitude zu dämpfen. Der Lagerkern 3 weist zwei Abschnitte 8, 8' mit größerer Wanddicke auf, in denen jeweils eine Senke 21, 21' in Form einer Kegelöffnung vorgesehen ist. In dieser kegelförmigen Senke 21, 21' ist jeweils ein Verdrängungskörper 15, 15' aufgenommen, dessen innerhalb der Senke 21, 21' befindlicher Bereich als Kegelstumpf 16, 16' ausgebildet ist. Der sich über die Senke 21, 21' erhebende Bereich des Verdrängungskörpers 15, 15' ist als Kugelabschnitt 18, 18' ausgebildet, dessen Kugelradius mit R_{K} bezeichnet ist.

Die beiden Verdrängungskörper 15, 15' liegen auf einer gemeinsamen Querachse QA des Elastomerlagers 1 und sind daher ebenso wie die Senken 21, 21' in den Abschnitten 8, 8' größerer Wanddicke diametral angeordnet. Die Kugelabschnitte 18, 18' sind in einem bestimmten Abstand zu der Innenwandung 14 der Lagerhülse 2 angeordnet, so daß die Innenwandung 14 als Bezugsfläche für die Verdrängungskörper 15, 15' bei Auslenkung des Lagers in Richtung der Querachse QA dient. Zwischen dem Kegelstumpf 16, 16' und der Senke 21, 21' wird jeweils eine Verdrängungskammer 20, 20' gebildet, wobei der Abstand der die Verdrängungskammer 20, 20' bildenden Flächen von Senke 21, 21' und Kegelstumpf 16, 16' gering ist.

Die Fig. 2 zeigt einen Schnitt entlang der Linie II-II in Fig. 1. Aus dieser Darstellung wird deutlich, daß der Lagerkern 3 an seinen Enden radiale Vorsprünge 34 besitzt und in dem axialen Zwischenraum zwischen den Vorsprüngen 34 der Elastomerkörper 4 auf der Mantelfläche des Lagerkerns 3 befestigt ist. Durch die Formgestaltung des Lagerkerns 3 mit den radialen Vorsprüngen 34 ergibt sich in axialer Richtung eine formschlüssige Verbindung. Innerhalb des Elastomerkörpers 4 bzw. an dessen Mantelfläche ist ein Drosselkanal 50 vorgesehen, durch den die Kammern 6 und 7 der Fig. 1 fluidisch kommunizieren. In dem - bezogen auf die Längsrichtung des Elastomerlagers 1 - mittleren Bereich verläuft das Formteil 13 in einem geringen Abstand zu der Lagerhülse 2, so daß zwischen Formteil 13 und Lagerhülse 2 jeweils ein Kanal 9 und 9' gebildet ist, wobei diese Kanäle 9, 9' als Bypass-Kanäle zum Drosselkanal 50 vorgesehen sind. Mittels später noch erläuterter Ventilmittel sind die Bypass-Kanäle 9, 9' bei normalen Drücken geschlossen und werden nur bei bestimmten Druckdifferenzen geöffnet. Der Innenradius der Lagerhülse 2 ist mit R_{H} bezeichnet, wobei das Verhältnis von Hülsenradius und Kugelradius vorzugsweise R_{H} : R_{K} = 1 : 0,6 beträgt.

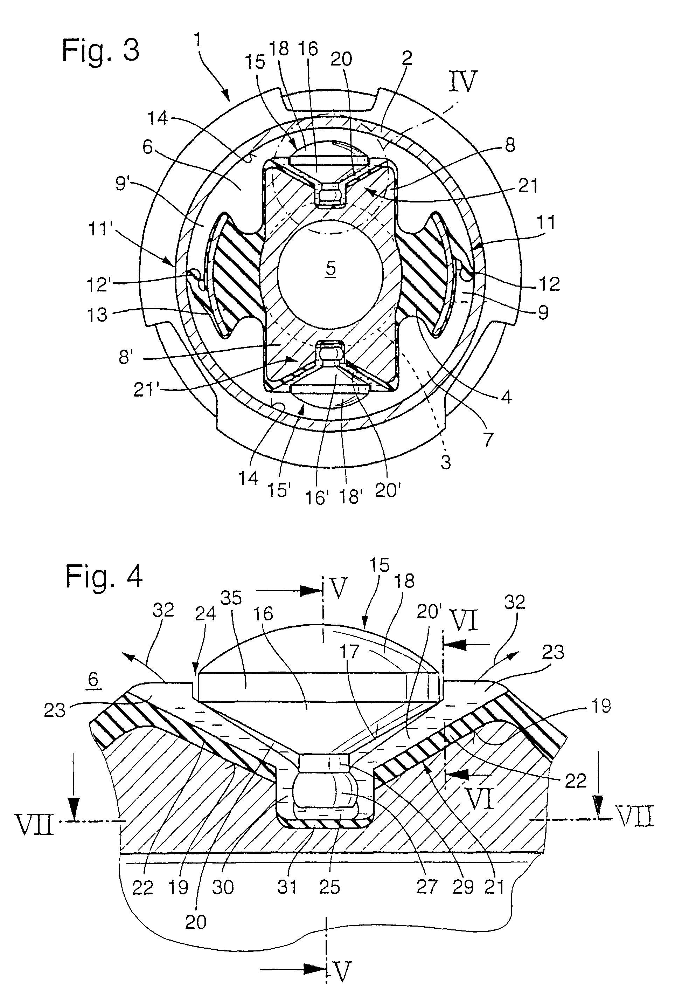

In Fig. 3 ist ein Schnitt entlang der Linie III-III in Fig. 1 gezeigt. Aus dieser Darstellung ist die Form des Lagerkerns 3 im Bereich der die Verdrängungskörper 15, 15' aufnehmenden Senken 21, 21' ersichtlich. In dem mittleren Bereich erstreckt sich der Elastomerkörper 4 lediglich seitlich des Lagerkerns 3 zwischen dessen Mantelfläche und dem Formteil 13, welches wiederum zu der Innenwand 14 der Lagerhülse 2 einen Abstand aufweist, durch den die Bypass-Kanäle 9 und 9' gebildet sind.

Eine an dem Elastomerkörper 4 angeformte Dichtlippe 12, 12' erstreckt sich jeweils in dem Bypass-Kanal 9, 9' bis an die Innenwand der Lagerhülse 2 und liegt an dieser an. Diese Dichtlippen 12, 12' bilden in jedem der Bypass-Kanäle 9, 9' ein Rückschlagventil 11, 11', wobei die Ventile 11, 11' in unterschiedlicher Richtung eines Druckgefälles öffnen. Sofern aufgrund von auf das Elastomerlager 1 wirkenden Schwingungen ein Druckgefälle von der Kammer 6 zur Kammer 7 entsteht, wird die zwischen den Kammern 6 und 7 auftretende Druckdifferenz verzögert über den Drosselkanal 50 abgebaut und so die Schwingung gedämpft. Nur bei extremen Schwingungsamplituden und demzufolge hoher Druckdifferenz der Kammern 6 und 7 hebt die Dichtlippe 12 von der Innenwand 14 der Lagerhülse 2 ab, wodurch das Rückschlagventil 11 öffnet, so daß durch den Kanal 9 ein rascherer Druckausgleich stattfinden kann. Im Falle eines entsprechenden Druckgefälles von der Kammer 7 zur Kammer 6 wird dieser Druckausgleich durch das in dem Kanal 9' befindliche Rückschlagventil 11' bewirkt. Die übrigen Bezugszeichen der Fig. 3 stimmen mit denjenigen der Fig. 1 und 2 überein, so daß auf die diesbezügliche Beschreibung der vorangegangenen Figuren verwiesen wird.

Die Fig. 4 zeigt eine vergrößerte Darstellung der Einzelheit IV in Fig. 3. Diese Darstellung macht deutlich, daß zwischen dem Kegelstumpf 16 des Verdrängungskörpers 15 und der Senke 21 ein Spalt gebildet ist, der sich bis zum Umfangsrand des Verdrängungskörpers 15 erstreckt. Auf einer kegeligen Fläche 19 der Senke 21 befindet sich ein Elastomerüberzug 22. Der Verdrängungsraum 20 wird aus dem Abstand zwischen der Kegelmantelfläche 17 des Kegelstumpfes 16 und der Oberfläche des Elastomerüberzugs 22 sowie zweier diametral gegenüber liegender Rinnen 20' gebildet, wobei sich die Rinnen 20' über die radiale Begrenzung des Kegelstumpfes 16 hinaus erstrecken. Der Verdrängungskörper 15 besitzt zwischen dem Kegelstumpf 16 und dem Kugelabschnitt 18 einen zylindrischen Abschnitt 35, dessen Mantelfläche in einem zylindrischen Abschnitt der Senke 21 liegt. Ein Ringspalt 24 zwischen dem zylindrischen Abschnitt 35 und der Senke 21 bildet eine Drosselöffnung, so daß Flüssigkeit aus der Verdrängungskammer 20 gedrosselt durch den Ringspalt 24 entweichen kann. Außerdem sind am oberen Rand der Senke 21 orthogonal angeordnete radiale Aussparungen 23 vorgesehen, durch die ebenfalls die Flüssigkeit aus der Verdrängungskammer 20 in Richtung der Pfeile 32 in die Kammer 6 strömen kann.

In der Senke 21 ist eine zylindrische Vertiefung 25 angeordnet, in die ein an dem Kegelstumpf 16 angeformter rotationssymmetrischer Fortsatz 27 ragt. Der Fortsatz 27 weist zum Boden 31 der Vertiefung 25 einen Abstand auf, wobei an den seitlichen Bereichen der Vertiefung 25 Kanäle 30 gebildet sind, die das Volumen unterhalb des Fortsatzes 27 mit der Verdrängungskammer 20 verbinden. In seinem unmittelbar an den Kegelstumpf 16 angrenzenden Bereich weist der Fortsatz 27 eine umlaufende Nut 29 auf.

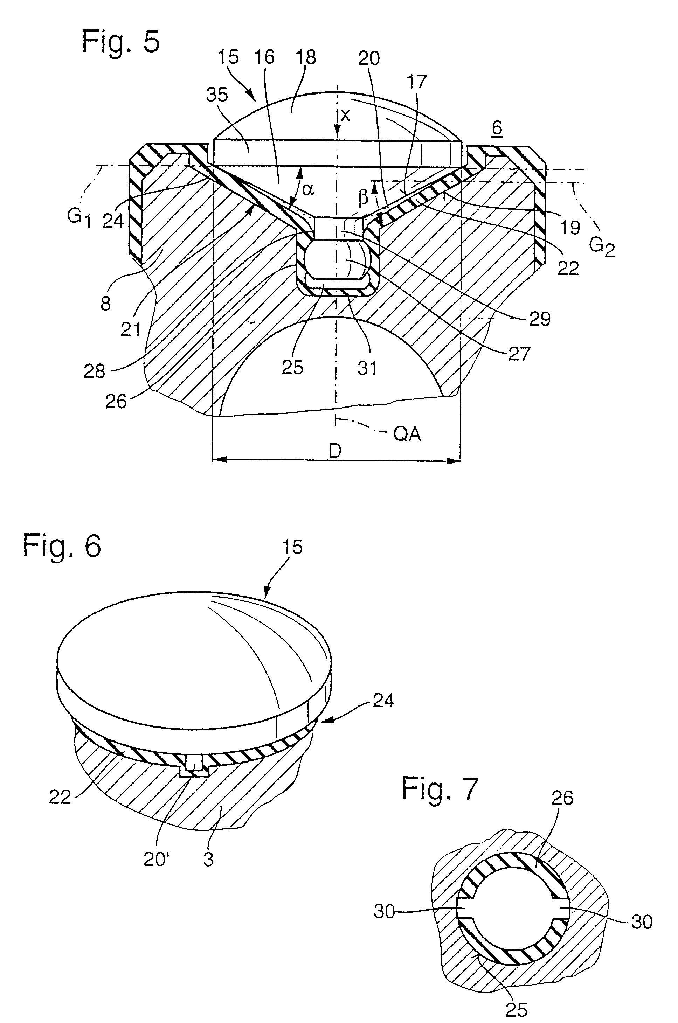

Die Fig. 5 zeigt eine Darstellung des Schnittes entlang der Linie V-V in Fig. 4. Dabei ist jedoch der Verdrängungskörper 15 in der Stellung gezeigt, die einer maximalen Belastung in Richtung der Schwingungsamplitude X entspricht. Dabei ist der Verdrängungskörper 15 derart in die Senke 21 hineingeschoben, daß der äußere Umfangsrand auf dem Elastomerüberzug 22 aufliegt und damit den Ringspalt 24 schließt, so daß die Verdrängungskammer 20 lediglich über die in Fig. 4 gezeigten radialen Aussparungen 23 mit der Kammer 6 in Verbindung steht.

Wie aus Fig. 5 weiterhin deutlich wird, geht der Elastomerüberzug 22 in der Vertiefung 25 in eine Elastomerschicht 26 über, die sowohl den zylindrischen Abschnitt der Vertiefung 25 als auch den Boden 31 bedeckt. Lediglich die in Fig. 4 bereits genannten Kanäle 30 an der Wandung der Vertiefung 25 verbinden das Volumen unterhalb des Fortsatzes 27 mit der Verdrängungskammer 20. Die Elastomerschicht 26 weist in der Höhe der radialen Nut 29 des Fortsatzes 27 einen radial nach innen gerichteten Wulst 28 auf, der in die Nut 29 greift. Die wirksame Verdrängungsfläche, durch die in der Verdrängungskammer 20 eine Dämpfungskraft erzeugt wird, entspricht der aus dem Durchmesser D des zylindrischen Abschnitts 35 des Verdrängungskörpers 15 bestimmten Kreisfläche des Verdrängungskörpers.

Die Kegelmantelfläche 17 ist im Ausführungsbeispiel der Fig. 5 bezogen auf eine orthogonal zu der Querachse QA verlaufenden Geraden G₁ in einem Winkel α von beispielsweise 28° angeordnet. Die kegelige Fläche 19 der Senke 21 verläuft in einem Winkel β von beispielsweise 30° zu einer orthogonal zur Querachse QA verlaufenden Geraden G₂, so daß die Verdrängungskammer 20 zur Mitte hin einen zunehmenden Abstand zwischen den Flächen 17 und 19 aufweist. Damit wird sichergestellt, daß der Verdrängungskörper am äußeren Umfangsrand den geringsten Abstand zu dem Elastomerüberzug 22 besitzt und somit dort zuerst zur Anlage gelangt. Ein weiteres Einwirken der Amplitude in Richtung des Pfeiles X hat dann zur folge, daß der Umfangsrand des Verdrängungskörpers 15 sich in den Elastomerüberzug 22 eindrückt und das Volumen der Verdrängungskammer 20 weiter verringert wird, wobei die entsprechende Rückwirkungskraft progressiv ansteigt, weil die Flüssigkeit aus der Verdrängungskammer 20 lediglich durch die radialen Aussparungen 23 in die Kammer 6 verdrängt werden kann.

Die Fig. 6 zeigt eine Ansicht des Verdrängungskörpers 15 in Richtung des Pfeiles VI der Fig. 4. Daraus wird deutlich, daß die Rinne 20' lediglich einen begrenzten Querschnitt hat.

Die Fig. 7 zeigt einen Schnitt entlang der Linie VII-VII in Fig. 4. In der Vertiefung 25 ist die zylindrische Wand von der Elastomerschicht 26 bedeckt, wobei lediglich zwei diametrale Kanäle 30 vorgesehen sind, die sich in axialer Richtung der Vertiefung 25 erstrecken, wie dies aus Fig. 4 ersichtlich ist.

Das in der Zeichnung dargestellte und vorstehend beschriebene Elastomerlager 1 bietet eine frequenzselektive hydraulische Dämpfung. Schwingungen mit kleiner Schwingungsamplitude werden dadurch gedämpft, daß sich der Lagerkern 3 relativ gegen die Lagerhülse 2 radial verschiebt, wodurch eine der Kammern 6 oder 7 bezüglich ihres Volumens verringert wird und die jeweils andere Kammer in gleichem Maße an Volumen zunimmt. Entsprechend dem dadurch entstehenden Druckgefälle erfolgt eine Schwingungsdämpfung durch den gedrosselten Ausgleich der Druckdifferenz über den Drosselkanal 50. Überschreitet die Druckdifferenz bei stärkeren Amplituden einen bestimmten Wert, wird das betreffende Rückschlagventil 11 bzw. 11' durch Abheben der Dichtlippe 12 bzw. 12' von der Innenwandung 14 der Lagerhülse 2 geöffnet, so daß mehr Druckfluid von der unter Druck stehenden Kammer zu der jeweils anderen Kammer strömen kann. Aufgrund der Drosselwirkung wirkt der durch die Schwingungsamplitude erzeugt Druck der eingeleiteten Kraft dämpfend entgegen.

Diese Funktion erfüllt das Elastomerlager 1 bei Auftreten von Schwingungsamplituden bis zu einer bestimmten Größe. Überschreitet die Schwingungsamplitude eine bestimmte Größe, durch die der Kugelabschnitt 18 des Verdrängungskörpers 15 zur Anlage an seiner Bezugsfläche, nämlich der Innenwand 14 der Lagerhülse 2 kommt, so wird der Verdrängungskörper 15 mit seinem Kegelstumpf 16 weiter in die Senke 21 hinein bewegt, so daß auf die Flüssigkeit in der Verdrängungskammer 20 eine Kraft ausgeübt wird und demzufolge der Druck in der Verdrängungskammer 20 ansteigt. Da sich dieser Druck nur allmählich durch den Ringspalt 24 abbauen kann, ergibt sich eine progressiv ansteigende Dämpfung, die mit zunehmender Verringerung des Ringspaltes 24 ständig größer wird. Setzt der Verdrängungskörper 15 mit seinem Umfangsrand auf dem Elastomerüberzug 22 auf, so kann der gegenüber der Kammer 6 höhere Druck in der Verdrängungskammer 20 nur noch durch die radialen Aussparungen 23 abgebaut werden.

Beim Abklingen der Schwingungsamplitude wirkt keine äußere Kraft auf den Verdrängungskörper 15, so daß dieser wieder seine ursprüngliche Lage einnehmen kann. Hierzu strömt das Fluid durch die radialen Aussparungen 23, beziehungsweise den Ringspalt 24 aus der Kammer 6 in die Verdrängungskammer 20 zurück. Damit der Verdrängungskörper 15 in einer definierten Ausgangslage gehalten wird, in der die Verdrängungskammer 20 ein vorbestimmtes Volumen sowie auch einen entsprechenden Abstand zwischen den Flächen 17 und 19 besitzt, greift der Wulst 28 der Elastomerschicht 26 in die Nut 29 am Fortsatz 27, wodurch die axiale Bewegung des Verdrängungskörpers 15 begrenzt ist.

## Patentansprüche

1. Hydraulisch dämpfendes Elastomerlager (1) mit
a) einer äußeren Lagerhülse (2),
b) einem in der Lagerhülse (2) angeordneten Elastomerkörper (4),
c) einem von dem Elastomerkörper (4) gehaltenen Lagerkern (3),
ca) der sich achsparallel oder koaxial durch die Lagerhülse (2) erstreckt,
d) zwischen dem Lagerkern (3) und der Lagerhülse (2) gebildeten und mit Flüssigkeit gefüllten Kammern (6, 7),
e) in wenigstens einer der Kammern (6, 7) einem zwischen dem Lagerkern (3) und der Innenwandung der Lagerhülse (2) angeordneten Verdrängungskörper (15), der
ea) im wesentlichen unelastisch ist,
eb) von einem der relativ zueinander bewegbaren Bauteile (2, 3) hydraulisch abgestützt gehalten ist,
ec) im unbelasteten Zustand des Elastomerlagers (1) einen vorgegebenen Abstand zu einer Bezugsfläche (14) am anderen der bewegbaren Bauteile (2, 3) aufweist,
ed) bei Überschreiten einer durch den Abstand vorgegebenen Belastung zur Anlage an seiner Bezugsfläche (14) kommt,
f) einer zwischen dem Verdrängungskörper (15) und dem diesen tragenden Bauteil (2, 3) gebildeten Verdrängungskammer (20, 20'), die
fa) eine geringe Höhe zwischen den Verdrängungsflächen aufweist,
fb) über mindestens eine Drosselöffnung (23, 24) mit einer der weiteren Kammern (6, 7) in Verbindung steht.

2. Elastomerlager nach Anspruch 1,
dadurch gekennzeichnet, daß der Verdrängungskörper (15, 15') am Lagerkern (3) angeordnet und die Bezugsfläche (14) an der Innenwandung der Lagerhülse (2) gebildet ist.

3. Elastomerlager nach Anspruch 2,
dadurch gekennzeichnet, daß zwei Verdrängungskörper (15, 15') vorgesehen sind, die auf einer gemeinsamen Querachse (QA) des Lagerkerns (3) liegen und diametral angeordnet sind.

4. Elastomerlager nach einem der vorhergehenden Ansprüche,
dadurch gekennzeichnet, daß an dem Lagerkern (3) eine Senke (21, 21') mit kegeliger Fläche (19, 19') vorgesehen ist, in der sich eine Kegelmantelfläche (17, 17') des Verdrängungskörpers (15, 15') befindet und zwischen diesen Flächen (17, 17' und 19, 19') die Verdrängungskammer (20, 20') gebildet ist.

5. Elastomerlager nach Anspruch 4,
dadurch gekennzeichnet, daß die kegelige Fläche (19, 19') der Senke (21, 21') und die Kegelmantelfläche (17, 17') des Verdrängungskörpers (15) bezogen auf eine zur Symmetrieachse orthogonale Ebene (G₁, G₂) unterschiedliche Winkel (α, β) aufweisen, wobei der Winkel (β) der kegeligen Fläche (19, 19') der Senke (21, 21') größer ist als der Winkel (α) der Kegelmantelfläche (17, 17') des Verdrängungskörpers (15, 15').

6. Elastomerlager nach Anspruch 5,
dadurch gekennzeichnet, daß der Winkel (β) der kegeligen Fläche (19, 19') < 40°, vorzugsweise ca. 30° beträgt.

7. Elastomerlager nach Anspruch 5 oder 6,
dadurch gekennzeichnet, daß die Differenz der Winkel von kegeliger Fläche (19, 19') und Kegelmantelfläche (17, 17') zwischen 1° und 5°, vorzugsweise ca. 2° beträgt.

8. Elastomerlager nach einem der Ansprüche 4 bis 7,
dadurch gekennzeichnet, daß zwischen dem oberen Rand der Senke (21, 21') und dem äußeren Umfang des Verdrängungskörpers (15, 15') ein Ringspalt (24) ausgebildet ist, der als Drosselöffnung zwischen der Verdrängungskammer (20, 20') und der weiteren Kammer (6 bzw. 7) dient.

9. Elastomerlager nach einem der vorhergehenden Ansprüche,
dadurch gekennzeichnet, daß zwischen dem Verdrängungskörper (15, 15') und dem diesen tragenden Bauteil (Lagerkern 3) eine elastomere Schicht angeordnet ist.

10. Elastomerlager nach Anspruch 9,
dadurch gekennzeichnet, daß die dem Verdrängungskörper (15) gegenüberliegende Fläche der Verdrängungskammer (20) auf einem Elastomerüberzug (22) gebildet ist.

11. Elastomerlager nach Anspruch 4 bis 8,
dadurch gekennzeichnet, daß am oberen Rand der Senke (21, 21') mindestens eine radiale Aussparung (23) vorgesehen ist, durch welche die Verdrängungskammer (29, 29') mit einer der weiteren Kammern (6, 7) in Verbindung steht.

12. Elastomerlager nach Anspruch 11,
dadurch gekennzeichnet, daß zwei radiale Aussparungen (23) diametral angeordnet sind, wobei die Aussparungen (23) nach Schließen des Ringspalts (24) Drosselöffnungen bilden.

13. Elastomerlager nach einem der vorhergehenden Ansprüche,
dadurch gekennzeichnet, daß der Abstand zwischen den Verdrängungsflächen (17, 17' und 19, 19') so bemessen ist, daß der maximale Hub des Verdrängungskörpers (15, 15') ca. 1 mm beträgt.

14. Elastomerlager nach einem der vorhergehenden Ansprüche,
dadurch gekennzeichnet, daß die beaufschlagte Verdrängungsfläche > 200 mm² ist und vorzugsweise zwischen 300 mm² und 500 mm² beträgt.

15. Elastomerlager nach einem der Ansprüche 4 bis 8,
dadurch gekennzeichnet, daß zentrisch in der Senke (21, 21') eine zylindrische Vertiefung (25) angeordnet ist, an deren Zylinderwand mindestens partiell eine Elastomerschicht (26) vorgesehen ist.

16. Elastomerlager nach Anspruch 15,
dadurch gekennzeichnet, daß an dem Verdrängungskörper (15, 15') ein rotationssymmetrischer Fortsatz (27) angeformt ist, der in die Vertiefung (25) ragt.

17. Elastomerlager nach Anspruch 16,
dadurch gekennzeichnet, daß die Elastomerschicht (26) einen radial nach innen gerichteten Wulst (28) aufweist, der in eine radiale Nut (29) des Fortsatzes (27) greift.

18. Elastomerlager nach einem der Ansprüche 15 bis 17,
dadurch gekennzeichnet, daß in der sich entlang der Zylinderwandung erstreckenden Elastomerschicht (26) mindestens ein Kanal (30) angeordnet ist, der sich etwa vom Boden der Vertiefung (25) bis in die Verdrängungskammer (20) erstreckt.

19. Elastomerlager nach einem der Ansprüche 4 bis 18,
dadurch gekennzeichnet, daß der außerhalb der Senke (21, 21') befindliche Bereich des Verdrängungskörpers (15, 15') als Kugelabschnitt (18, 18') ausgebildet ist, dessen Kugelradius (R_{K}) vorzugsweise etwa das 0,6-fache des Innenradius (R_{H}) der Hülse beträgt.

20. Elastomerlager nach Anspruch 4 oder einem der folgenden,
dadurch gekennzeichnet, daß der Lagerkern (3) als Hülse ausgebildet ist, an deren Mantelfläche Abschnitte (8, 8') mit größerer Wanddicke gestaltet sind, in denen jeweils die Senke (21, 21') angeordnet ist.

21. Elastomerlager nach einem der vorhergehnden Ansprüche,
dadurch gekennzeichnet, daß mindestens ein Drosselkanal (50) vorgesehen ist, über den die Kammern (6, 7) fluidisch kommunizieren.

22. Elastomerlager nach Anspruch 21,
dadurch gekennzeichnet, daß zwei Bypass-Kanäle (9, 9') zwischen den Kammern (6) und (7) vorgesehen sind, und in jedem Kanal (9, 9') ein bei einem bestimmten Überdruck öffnendes Rückschlagventil (11, 11') angeordnet ist, wobei die Rückschlagventile (11, 11') in unterschiedlichen Strömungsrichtungen öffnen.

23. Elastomerlager nach Anspruch 22,
dadurch gekennzeichnet, daß die Rückschlagventile (11, 11') durch an der Innenwandung (14) der Lagerhülse (2) anliegende Dichtlippen (12, 12') des Elastomerkörpers (4) gebildet sind.

24. Elastomerlager nach Anspruch 4,
dadurch gekennzeichnet, daß an der kegeligen Fläche (19, 19') zwei diametral verlaufende Rinnen (20') angeordnet sind, die sich bis über den äußeren Umfangsrand der Kegelmantelfläche (17, 17') erstrekken.

## Claims

1. A hydraulically damping elastomeric bearing (1) with
a) an outer bearing sleeve (2),
b) an elastomeric body (4) disposed in the bearing sleeve (2),
c) a bearing core (3) held by the elastomeric body (4),
ca) and which extends axially parallel or coaxially through the bearing sleeve (2),
d) fluid-filled chambers (6, 7) formed between the bearing core (3) and the bearing sleeve (2),
e) a displacement body (15) disposed in at least one of the chambers and between the bearing core (3) and the inner walls of the bearing sleeve (2) and which
ea) is substantially non-elastic,
eb) is held in hydraulically braced fashion by one of the component parts (2, 3) which are adapted for movement in relation to one another,
ec) has in the unladen state of the elastomeric bearing (1) a predetermined gap in respect of a reference surface (14) on the other of the movable components (2, 3),
ed) comes to bear on its reference surface (14) if the loading predetermined by the gap is exceeded,
f) a displacement chamber (20, 20') formed between the displacement body (15) and the component part (2, 3) which carries this latter, said displacement chamber (20, 20') comprising
fa) a minimal height between the displacement surfaces,
fb) communication with one of the further chambers (6, 7) via at least one throttle aperture (23, 24).

2. An elastomeric bearing according to Claim 1, characterised in that the displacement body (15, 15') is disposed on the bearing core (3) and the reference surface (14) is formed on the inside wall of the bearing sleeve (2).

3. An elastomeric bearing according to Claim 2, characterised in that two displacement bodies (15, 15') are provided which are diametrally disposed, lying on a common transverse axis (QA) through the bearing core (3).

4. An elastomeric bearing according to one of the preceding Claims, characterised in that there is on the bearing core (3) a depression (21, 21') with a conical surface (19, 19') in which there is a conical surface (17, 17') of the displacement body (15, 15'), the displacement chamber (20, 20') being formed between these surfaces (17, 17' and 19, 19').

5. An elastomeric bearing according to Claim 4, characterised in that the conical surface (19, 19') of the depression (21, 21') and the conical surface (17, 17') of the displacement body (15), in relation to a plane (G₁, G₂) at right-angles to the axis of symmetry, are at different angles (α, β), the angle (β) of the conical surface (19, 19') of the depression (21, 21') being greater than the angle (α) of the conical surface (17, 17') of the displacement body (15, 15').

6. An elastomeric bearing according to Claim 5, characterised in that the angle (β) of the conical surface (19, 19') amounts to < 40° and is preferably approx 30°.

7. An elastomeric bearing according to Claim 5 or 6, characterised in that the difference between the angles of conical surface (19, 19') and conical surface (17, 17') amounts to between 1° and 5° and is preferably approx 2°.

8. An elastomeric bearing according to one of Claims 4 to 7, characterised in that between the upper edge of the depression (21, 21') and the outer periphery of the displacement body (15, 15') there is an annular gap (24) which serves as a throttle aperture between the displacement chamber (20, 20') and the further chamber (6, 7).

9. An elastomeric bearing according to one of the preceding Claims, characterised in that between the displacement body (15, 15') and the component (bearing core 3) carrying it there is a layer of elastomer.

10. An elastomeric bearing according to Claim 9, characterised in that the surface of the displacement chamber (20) which is opposite the displacement member (15) is formed on an elastomeric coating (22).

11. An elastomeric bearing according to Claim 4 to 8, characterised in that on the upper edge of the depression (21, 21') there is at least one radial recess (23) through which the displacement chamber (29, 29') communicates with one of the further chamber (6, 7).

12. An elastomeric bearing according to Claim 11, characterised in that two radial recesses (23) are diametrally disposed, the recesses (23) forming throttle apertures after the annular gap (24) is closed.

13. An elastomeric bearing according to one of the preceding claims, characterised in that the gap between the displacement surfaces (17, 17') and (19, 19') is so dimensioned that the maximum travel of the displacement body (15, 15') amounts to approx 1 mm.

14. An elastomeric bearing according to one of the preceding Claims, characterised in that the admission displacement surface is > 200 mm² and preferably amounts to between 300 mm² and 500 mm².

15. An elastomeric bearing according to one of Claims 4 to 8, characterised in that centrally in the depression (21, 21') is a cylindrical depression (25) on the cylindrical wall of which there is, at least partially, a layer (26) of elastomer.

16. An elastomeric bearing according to Claim 15, characterised in that integrally formed on the displacement body (15, 15') is a rotationally symmetrical extension piece (27) which projects into the depression (25).

17. An elastomeric bearing according to Claim 16, characterised in that the elastomeric layer (26) has a radially inwardly directed bead (28) which engages a radial groove (29) of the extension piece (27).

18. An elastomeric bearing according one of Claims 15 to 17, characterised in that in the elastomeric layer (26) extending along the cylindrical wall there is at least one channel (30) which extends substantially from the bottom of the depression (25) as far as and into the displacement chamber (20).

19. An elastomeric bearing according to one of Claims 4 to 18, characterised in that the region of the displacement body (15, 15') disposed outside the depression (21, 21') is constructed as a spherical portion (18, 18') the spherical radius (R_{K}) of which preferably amounts to substantially 0.6 times the internal radius (R_{H}) of the sleeve.

20. An elastomeric bearing according to Claim 4 or one of the subsequent Claims, characterised in that the bearing core (3) is constructed as a sleeve on the outer surface of which are formed portions (8, 8') of greater wall thickness and in which the depression (21, 21') is disposed.

21. An elastomeric bearing according to one of the preceding claims, characterised in that at least one throttle channel (50) is provided via which the chambers (6, 7) are in fluid communication.

22. An elastomeric bearing according to Claim 21, characterised in that two bypass channels (9, 9') are provided between the chambers (6) and (7) and in each channel (9, 9') there is a non-return valve (11, 11') which opens at a specific overpressure, the non-return valves (11, 11') opening in different directions of flow.

23. An elastomeric bearing according to Claim 22, characterised in that the non-return valves (11, 11') are formed by sealing lips (12, 12') of the elastomeric body (4) which bear on the inside walls (14) of the bearing sleeve (2).

24. An elastomeric bearing according to Claim 4, characterised in that there are on the conical surface (19, 19') two diametrally extending grooves (20') which extend as far as over the outer peripheral edge of the conical surface (17, 17').

## Revendications

1. Palier en élastomère (1) à amortissement hydraulique, comprenant
a) une douille de palier extérieure (2),
b) un corps en élastomère (4) disposé dans la douille 2,
c) un noyau de palier (3) maintenu par le corps en élastomère (4)
ca) et s'étend parallèlement à l'axe ou coaxialement à travers la douille (2),
d) des chambres (6, 7) formées entre le noyau (3) et la douille (2) et remplies de liquide,
e) un corps déplaceur (15) disposé dans au moins l'une des chambres (6, 7) entre le noyau (3) et la paroi interne de la douille (2), corps qui
ea) est essentiellement inélastique,
eb) est maintenu appuyé hydrauliquement par l'un des éléments (2, 3) mobiles l'un par rapport à l'autre,
ec) présente, à l'état non chargé du palier en élastomère (1), une distance préfixée d'une surface de référence (14) sur l'autre des éléments mobiles (2, 3) et
ed) vient s'appliquer contre sa surface de référence (14) en cas de dépassement de la charge préfixée par ladite distance et
f) une chambre de refoulement (20, 20') formée entre le corps déplaceur (15) et l'élément (2, 3) portant ce corps, chambre qui
fa) présente une faible hauteur entre les surfaces de refoulement et
fb) communique à travers au moins une ouverture d'étranglement (23, 24) avec l'une des autres chambres (6, 7).

2. Palier en élastomère selon la revendication 1, caractérisé en ce que le corps déplaceur (15, 15') est disposé sur le noyau de palier (3) et la surface de référence (14) est formée sur la paroi interne de la douille de palier (2).

3. Palier en élastomère selon la revendication 2, caractérisé en ce que deux corps déplaceurs (15, 15') sont prévus, qui sont situés sur un axe transversal commun (QA) du noyau de palier (3) et sont disposés diamétralement.

4. Palier en élastomère selon une des revendications précédentes, caractérisé en ce qu'une cuvette (21, 21') à surface conique (19, 19') est prévue sur le noyau de palier (3), dans laquelle se trouve une surface latérale conique (17, 17') du corps déplaceur (15, 15'), et la chambre de refoulement (20, 20') est formée entre ces surfaces (17, 17' et 19, 19').

5. Palier en élastomère selon la revendication 4, caractérisé en ce que la surface conique (19, 19') de la cuvette (21, 21') et la surface latérale conique (17, 17') du corps déplaceur (15) présentent des angles différents (α, β) par rapport à un plan (G₁, G₂) orthogonal à l'axe de symétrie, l'angle (β) de la surface conique (19, 19') de la cuvette (21, 21') étant plus grand que l'angle (α) de la surface latérale conique (17, 17') du corps déplaceur (15, 15').

6. Palier en élastomère selon la revendication 5, caractérisé en ce que l'angle (β) de la surface conique (19, 19') est inférieur à 40° et est de préférence d'environ 30°.

7. Palier en élastomère selon la revendication 5 ou 6, caractérisé en ce que la différence des angles de la surface conique (19, 19') et de la surface latérale conique (17, 17') est comprise entre 1° et 5° et est de préférence d'environ 2°.

8. Palier en élastomère selon une des revendications 4 à 7, caractérisé en ce qu'une fente annulaire (24) est formée entre le bord supérieur de la cuvette (21, 21') et la périphérie extérieure du corps déplaceur (15, 15'), fente qui sert d'ouverture d'étranglement entre la chambre de refoulement (20, 20') et l'autre chambre (6 ou 7).

9. Palier en élastomère selon une des revendications précédentes, caractérisé en ce qu'une couche en élastomère est disposée entre le corps déplaceur (15, 15') et l'élément (noyau de palier 3) portant ce corps.

10. Palier en élastomère selon la revendication 9, caractérisé en ce que la surface de la chambre de refoulement (20) située à l'opposé du corps déplaceur (15) est formée sur un revêtement en élastomère (22).

11. Palier en élastomère selon les revendications 4 à 8, caractérisé en ce qu'au moins un évidement radial (23) est prévu dans le bord supérieur de la cuvette (21, 21'), évidement à travers duquel la chambre de refoulement (29, 29') communique avec l'une des autres chambres (6, 7).

12. Palier en élastomère selon la revendication 11, caractérisé en ce que deux évidements radiaux (23) sont disposés diamétralement et constituent des ouvertures d'étranglement après la fermeture de la fente annulaire (24).

13. Palier en élastomère selon une des revendications précédentes, caractérisé en ce que la distance entre les surfaces de refoulements (17, 17' et 19, 19') est dimensionnée de manière que la course maximale du corps déplaceur (15, 15') soit d'environ 1 mm.

14. Palier en élastomère selon une des revendications précédentes, caractérisé en ce que la surface de refoulement sollicitée dépasse 200 mm² et est de préférence comprise entre 300 mm² et 500 mm².

15. Palier en élastomère selon une des revendications 4 à 8, caractérise en ce qu'un creux cylindrique (25) est ménagé dans le centre de la cuvette (21, 21'), creux sur une partie au moins de la paroi cylindrique duquel est prévue une couche en élastomère (26).

16. Palier en élastomère selon la revendication 15, caractérisé en ce qu'un prolongement (27) à symétrie de révolution est formé sur le corps déplaceur (15, 15') et pénètre dans le creux (25).

17. Palier en élastomère selon la revendication 16, caractérisé en ce que la couche en élastomère (26) présente un bourrelet (28) dirigé radialement vers l'intérieur et engagé dans une rainure radiale (29) du prolongement (27).

18. Palier en élastomère selon une des revendications 15 à 17, caractérisé en ce qu'au moins un canal (30) est agencé dans la couche en élastomère (26) s'étendant le long de la paroi cylindrique, canal qui s'étend à peu près à partir du fond du creux (25) jusque dans la chambre de refoulement (20).

19. Palier en élastomère selon une des revendications 4 à 18, caractérisé en ce que la partie du corps déplaceur (15, 15') se trouvant à l'extérieur de la cuvette (21, 21') est réalisée à la façon d'une calotte sphérique (18, 18') dont le rayon (R_{K}) correspond de préférence à peu près à 0,6 fois le rayon intérieur (R_{H}) de la douille.

20. Palier en élastomère selon la revendication 4 ou l'une des revendications suivantes, caractérisé en ce que le noyau de palier (3) est réalisé comme une douille à la surface latérale de laquelle sont formés des segments (8, 8') ayant une plus grande épaisseur de paroi et dans chacun desquels est agencée une cuvette (21, 21').

21. Palier en élastomère selon une des revendications précédentes, caractérisé en ce qu'un canal d'étranglement (50) est prévu, à travers duquel les chambres (6, 7) sont en communication fluidique entre elles.

22. Palier en élastomère selon la revendication 21, caractérisé en ce que deux canaux de dérivation (9, 9') sont prévus entre les chambres (6 et 7) et dans chacun de ces canaux (9, 9') est placé un clapet antiretour (11, 11') s'ouvrant à une surpression déterminée, les clapets antiretour (11, 11') s'ouvrant dans des directions d'écoulement différentes.

23. Palier en élastomère selon la revendication 22, caractérisé en ce que les clapets antiretour (11, 11') sont formés par des lèvres d'étanchéité (12, 12') appliquées contre la paroi interne (14) de la douille de palier (2) et faisant partie du corps en élastomère (4).

24. Palier en élastomère selon la revendication 4, caractérisé en ce que deux gouttières (20'), s'étendant diamétralement, sont formées dans la surface conique (19, 19') et se prolongent jusqu'au-delà du bord périphérique extérieur de la surface latérale conique (17, 17').
